# FASCICULE DE BREVET EUROPEEN

(11) **EP 4 377 109 B1**
(45) Date de publication et mention de la délivrance du brevet: **11.03.2026**
(21) Numéro de dépôt: 22744274.6
(22) Date de dépôt: 24.06.2022
(51) Int. Cl.: B60J 5/04, B62D 25/24

(54) **OUVRANT DE VÉHICULE AUTOMOBILE COMPORTANT UNE DOUBLURE INTERNE ET UN ÉLÉMENT D'ÉTANCHÉITÉ**
KRAFTFAHRZEUGTÜR MIT EINER INNENAUSKLEIDUNG UND EINEM DICHTELEMENT
MOTOR VEHICLE DOOR HAVING AN INNER LINING AND A SEALING ELEMENT

(30) Priorité: 30.07.2021 FR 2108321
(43) Date de publication de la demande: 05.06.2024
(73) Titulaire: Stellantis Auto SAS, 78300 Poissy (FR)
(72) Inventeur: ROY, Christian, 25490 ALLENJOIE (FR); LEFORT, Dominique, 25200 GRAND CHARMONT (FR); MARMIER, Guillaume, 25230 SELONCOURT (FR); DEMOUGEOT, Damien, 25150 ECOT (FR)
(74) Mandataire: BCIP
(86) Numéro de dépôt international: PCT/FR2022/051254
(87) Numéro de publication internationale: WO 2023/007068

(56) Documents cités:
- WO-A1-2012/014531
- DE-A1- 102016 219 177
- FR-A1- 3 089 196

## Description

La présente invention revendique la priorité de la demande française 2108321 déposée le 30 juillet 2021.

L'invention se rapporte au domaine de l'étanchéité des ouvrants de véhicules automobiles, et notamment des portes latérales de véhicules automobiles.

Une porte de véhicule automobile comporte généralement une doublure interne solidaire d'une peau externe, un panneau de garnissage étant fixé à la doublure interne.

La doublure interne comporte des ouvertures permettant le montage et/ou l'accès à certains composants internes de la porte, par exemple certains composants des dispositifs lève-vitres. L'étanchéité de la porte est généralement assurée par des éléments obturateurs tels que celui décrit dans la demande de brevet français publiée sous le numéro FR 3 089 196 A1.

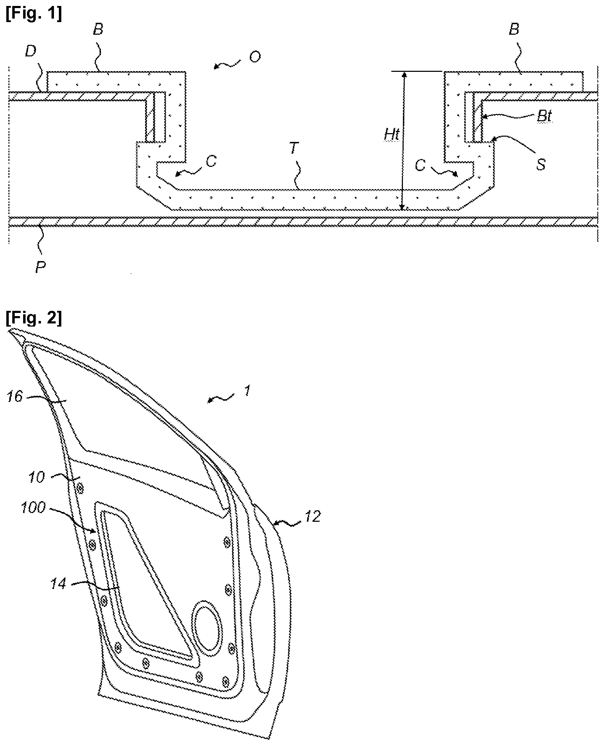

Un tel élément obturateur est visible sur la figure 1, qui est une vue en coupe d'une partie d'un ouvrant, dans l'exemple une porte latérale d'un véhicule automobile. La porte représentée à la figure 1 comporte une peau externe P et une doublure interne D définissant ensemble un espace interne. Un élément obturateur O est partiellement inséré dans une ouverture ménagée dans la doublure interne D. L'élément obturateur O est un élément creux, qui présente dans l'exemple de la figure 1 une section transversale de forme circulaire. Il comporte une base B solidaire d'une tête T, la base B étant en appui sur la doublure interne D tandis que la tête T est insérée dans l'ouverture ménagée dans la doublure interne D. La tête T comporte une surface d'étanchéité S de forme annulaire qui est maintenue en contact avec l'extrémité libre d'un bord tombé Bt formant un angle sensiblement égal à 90° avec une partie de la doublure interne D, et formant ainsi une surface d'appui pour l'élément obturateur O.

L'élément obturateur est généralement fabriqué par thermoformage d'une feuille de matière plastique. Afin d'assurer à l'élément obturateur le comportement souhaité, celui-ci comporte au sein de la tête T, à proximité de la surface d'étanchéité S, une cavité C. Lors des opérations de thermoformage, la réalisation de la cavité C nécessite l'utilisation d'une cale , qui doit pouvoir être maintenue en place lors du formage de la matière et retirée ensuite. Les cales utilisées doivent présenter une épaisseur minimale, généralement une épaisseur de plusieurs millimètres. Si l'on souhaite diminuer l'encombrement de l'élément obturateur en réduisant la hauteur Ht de celui-ci, il n'est donc pas envisageable de réduire la hauteur de la cavité C.

L'invention a pour objectif de proposer un élément d'étanchéité du type décrit ci-dessus, dont la conception permette de réduire l'encombrement.

À cet effet, l'invention concerne un ouvrant de véhicule automobile comportant une doublure interne solidaire d'une peau externe, la doublure interne comportant au moins une ouverture fermée par un élément d'étanchéité amovible, l'élément d'étanchéité comportant :
- une base disposée à l'extérieur d'un espace intérieur formé entre la peau externe et la doublure interne, la base comportant une première surface d'étanchéité en appui sur une surface d'appui formée par une partie d'appui de la doublure interne, la partie d'appui entourant l'ouverture le long de tout le pourtour de celle-ci ;
- une tête disposée au sein de l'espace intérieur et solidaire de la base par l'intermédiaire d'une partie de liaison ;
l'ouverture de la doublure interne étant délimitée par un bord tombé, formé par une partie d'extrémité solidaire de la partie d'appui, et formant avec celle-ci un angle α de valeur comprise entre 100° et 150°, la tête de l'élément d'étanchéité comportant une deuxième surface d'étanchéité qui est en appui sur l'extrémité libre de la partie d'extrémité formant le bord tombé, l'élément d'étanchéité étant configuré de telle sorte que la première surface d'étanchéité et la deuxième surface d'étanchéité forment un angle β dont la valeur est comprise entre la valeur égale à α-95° et la valeur égale α-85°.

Ainsi, en prévoyant que le bord de l'ouverture ménagée dans la doublure interne est formé par un bord tombé incliné, formant avec la base de ce bord un angle supérieur à 100°, et en inclinant la surface d'étanchéité de l'élément d'étanchéité en contact avec le bord tombé, la forme de la cavité formée au sein de la tête se trouve modifié d'une manière facilitant sa fabrication. Il devient alors possible de réduire la taille de cette cavité et ainsi la hauteur de l'élément d'étanchéité.

Dans une réalisation, l'angle α est compris entre 105° et 135°, et de préférence entre 110° et 130°, et par exemple compris entre 115 et 125°.

Dans une réalisation, l'angle β est compris entre α-92° et α-88°, et par exemple égal à α-90°.

Dans une réalisation, l'angle α est compris entre 115° et 125°, l'angle β étant égal à α-90°.

Dans une réalisation, l'élément d'étanchéité est fabriqué par thermoformage d'une feuille d'une matière plastique.

Dans une réalisation, l'élément d'étanchéité est fabriqué à partir d'une feuille de matière plastique comportant du polyéthylène ou du polypropylène.

Dans une réalisation, la doublure interne et/ou la peau externe est (sont) fabriquée(s) à partir d'un matériau métallique, tel que de l'acier.

Dans une réalisation, l'ouvrant forme une porte latérale de véhicule automobile. L'invention concerne également un véhicule automobile comportant au moins un ouvrant conforme à celui défini ci-dessus.

La présente invention sera mieux comprise à la lecture de la description détaillée qui suit, faite en référence aux dessins annexés, dans lesquels :
[Fig. 1] La figure 1, précédemment décrite, représente partiellement une porte de véhicule automobile équipée d'un élément obturateur connu.
[Fig. 2] La figure 2 est une vue en perspective d'une porte de véhicule automobile conforme à l'invention.
[Fig. 3] La figure 3 est une vue en coupe de la porte de la figure 2.

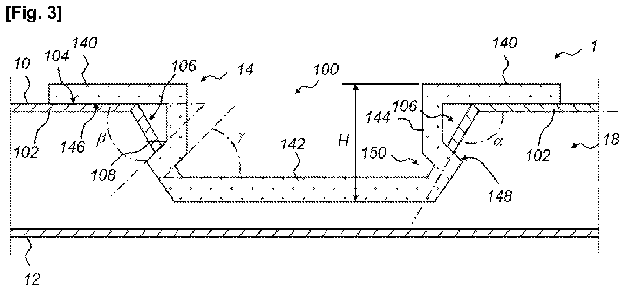

La figure 2 et 3 illustrent une porte 1 de véhicule automobile conforme à' l'invention, dans l'exemple une porte latérale avant gauche. La porte 1 comporte une doublure interne 10 solidaire d'une peau externe 12. Un panneau de garnissage, non représenté sur la figure 2, est fixé à la doublure interne 10. La doublure interne 10 comporte au moins une ouverture 100 fermée par un élément d'étanchéité 14 amovible. L'élément d'étanchéité 14 permet d'éviter des infiltrations d'eau dans la porte 1, et peut être retiré s'il est nécessaire d'intervenir sur des composants de la porte 1 disposés entre la doublure interne 10 et la peau externe 12. La porte 1 comporte par ailleurs une vitre 16 escamotable.

Comme visible sur la figure 3, qui est une vue partielle en coupe de la porte 1 dans un plan passant au niveau de l'ouverture 100, l'élément d'étanchéité 14 comporte une base 140, destinée à être disposée à l'extérieur d'un espace interne 18 formé entre la peau externe 12 et la doublure interne 10, et plus précisément à être disposée en appui sur la doublure interne 10. L'élément d'étanchéité 14 comporte en outre une tête 142, solidaire de la base 142 et formant une saillie depuis celle-ci. La tête 142 est destinée à être disposée au sein de l'espace interne 18 situé entre la doublure interne 10 et la peau externe 12. La tête 142 est dans l'exemple liée à la base 140 par une partie de liaison 144. La base 140, la partie de liaison 144 et la tête 142 sont de préférence venues de matière.

La base 140 de l'élément d'étanchéité 14 comporte une première surface d'étanchéité 146 qui est en appui sur la doublure interne 10, au niveau d'une partie d'appui 102 de la doublure interne 10. La partie d'appui 102 entoure l'ouverture 100 le long de toute sa périphérie, et forme une surface d'appui 104 pour la base 140. La première surface d'étanchéité 146 et la surface d'appui 104 sont en contact de façon à assurer une étanchéité entre la base 140 et la partie d'appui 102, notamment une étanchéité à l'eau. L'ouverture 100 ménagée dans la doublure interne 10 est délimitée par un bord tombé 106. Le bord tombé 106 est formé par une partie d'extrémité 108 solidaire d'une extrémité de la partie d'appui 102, et formant avec celle-ci un angle α. Conformément à l'invention, l'angle α est compris entre 100° et 150°, et est de préférence compris entre 100° et 135° ou entre 110° et 130° et par exemple égal à 120°. L'extrémité libre de la partie d'extrémité 108 est en contact étanche avec une deuxième surface d'étanchéité 148 formée sur la tête 142 de l'élément d'étanchéité 14. La première surface d'étanchéité 146 et la deuxième surface d'étanchéité 148 sont disposées de part et d'autre de la partie de liaison 144, de façon à prendre en tenaille la partie d'extrémité 108. De plus, la première surface d'étanchéité 146 et la deuxième surface d'étanchéité 148 forment un angle β permettant que la deuxième surface d'étanchéité 148 soit orientée de façon sensiblement perpendiculaire à la direction d'allongement de la partie d'extrémité 108 formant le bord tombé 106 délimitant l'ouverture 100. En d'autres termes, la valeur de l'angle β est proche de la valeur α-90°, et est par exemple compris entre α-95° et α-85°. Cette configuration de l'ouverture 100 ménagée dans la doublure interne 10 et de l'élément d'étanchéité 14 permet d'assurer l'étanchéité requise, tout en permettant d'éviter les contraintes dimensionnelles liées à la fabrication de l'élément d'étanchéité. En effet, la valeur de l'angle β, qui dépend de la valeur de l'angle α, permet de prévoir une forme de la tête 144 améliorée avec une forme évasée de la cavité 150. La cavité 150 présente ainsi une forme évasée formant un angle γ dont la valeur est sensiblement égale à celle de l'angle β, comme visible sur la figure 3. Cette forme évasée de la cavité 150 permet de diminuer la hauteur de la cavité 150 et donc la hauteur de la tête 142, tout en simplifiant l'étape de thermoformage (notamment en simplifiant l'usage de cales). Ainsi la hauteur totale H de l'élément d'étanchéité conforme à l'invention peut être réduite, et son encombrement est ainsi diminué. Un gain de l'ordre de 5 à 10 millimètres par rapport à l'élément obturateur de la figure 1 peut être facilement obtenu grâce à l'invention.

Avantageusement, l'élément d'étanchéité 14 est fabriqué par thermoformage d'une feuille d'une matière plastique, comportant par exemple du polyéthylène ou du polypropylène.

Avantageusement, la doublure interne et/ou la peau externe est (sont) fabriquée(s) à partir d'un matériau métallique, tel que de l'acier.

## Revendications

1. Ouvrant (1) de véhicule automobile comportant une doublure interne (10) solidaire d'une peau externe (12), la doublure interne (10) comportant au moins une ouverture (100) fermée par un élément d'étanchéité (14) amovible, l'élément d'étanchéité (14) comportant :
- une base (140) disposée à l'extérieur d'un espace interne (18) formé entre la peau externe (12) et la doublure interne (10), la base (140) comportant une première surface d'étanchéité (146) en appui sur une surface d'appui (104) formée par une partie d'appui (102) de la doublure interne (10), la partie d'appui (102) entourant l'ouverture (100) le long de tout le pourtour de celle-ci ;
- une tête (142) disposée au sein de l'espace interne (18) et solidaire de la base (140) par l'intermédiaire d'une partie de liaison (144) ;
**caractérisé en ce que**
l'ouverture (100) de la doublure interne (10) est délimitée par un bord tombé (106), formé par une partie d'extrémité (108) solidaire de la partie d'appui (102), et formant avec celle-ci un angle α de valeur comprise entre 100° et 150°, la tête (142) de l'élément d'étanchéité comportant une deuxième surface d'étanchéité (148) qui est en appui sur l'extrémité libre de la partie d'extrémité (108) formant le bord tombé (106), l'élément d'étanchéité (14) étant configuré de telle sorte que la première surface d'étanchéité (146) et la deuxième surface d'étanchéité (148) forment un angle β de valeur comprise entre α-95° et α-85°, l'élément d'étanchéité (14) étant fabriqué par thermoformage d'une feuille d'une matière plastique.

2. Ouvrant (1) selon la revendication précédente, dans lequel l'angle α est compris entre 105° et 135°, et de préférence entre 110° et 130°, et par exemple compris entre 115 et 125°.

3. Ouvrant (1) selon l'une des revendications précédentes, dans lequel l'angle β est compris entre α-92° et α-88°, et par exemple égal à α-90°.

4. Ouvrant (1) selon les revendications 1 à 3, dans lequel l'angle α est compris entre 115° et 125°, l'angle β étant égal à α-90°.

5. Ouvrant (1) selon l'une quelconque des revendications précédentes, dans lequel l'élément d'étanchéité (14) est fabriqué à partir d'une feuille de matière plastique comportant du polyéthylène ou du polypropylène.

6. Ouvrant (1) selon l'une des revendications précédentes, dans lequel la doublure interne (10) et/ou la peau externe (12) est (sont) fabriquée(s) à partir d'un matériau métallique, tel que de l'acier.

7. Ouvrant (1) selon l'une des revendications précédentes, lequel forme une porte latérale de véhicule automobile.

8. Véhicule automobile comportant au moins un ouvrant (1) conforme à l'une des revendications précédentes.

## Patentansprüche

1. Türöffnung (1) für ein Kraftfahrzeug mit einer mit einer Außenhaut (12) fest verbundenen Innenauskleidung (10), wobei die Innenauskleidung (10) mindestens eine Öffnung (100) aufweist, die durch ein abnehmbares Dichtungselement (14) verschlossen ist, wobei das Dichtungselement (14) aufweist:
- eine Basis (140), die außerhalb eines zwischen der Außenhaut (12) und der Innenauskleidung (10) gebildeten Innenraums (18) angeordnet ist, wobei die Basis (140) eine erste Dichtfläche (146) aufweist, die auf einer Auflagefläche (104) aufliegt, die durch einen Auflageteil (102) der Innenauskleidung (10) gebildet ist, wobei der Auflageteil (102) die Öffnung (100) entlang ihres gesamten Umfangs umgibt;
- einen Kopf (142), der innerhalb des Innenraums (18) angeordnet und über einen Verbindungsabschnitt (144) mit der Basis (140) verbunden ist;
**dadurch gekennzeichnet, dass** die Öffnung (100) der inneren Auskleidung (10) von einem abfallenden Rand (106) begrenzt wird, der von einem mit dem Auflageteil (102) fest verbundenen Endteil (108) gebildet wird und mit diesem einen 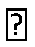 Winkel von einem Wert zwischen 100° und 150° bildet, wobei der Kopf (142) des Dichtungselements eine zweite Dichtfläche (148) aufweist, die auf dem freien Ende des Endteils (108) aufliegt Die Absenkkkante (106) bildend, wobei das Dichtelement (14) derart ausgebildet ist, dass die erste Dichtfläche (146) und die zweite Dichtfläche (148) einen α Winkel zwischen α-95° und α-85° bilden, wobei das Dichtelement (14) durch Thermoformen einer Kunststoff-Folie hergestellt ist.

2. Türöffner (1) nach dem vorhergehenden Anspruch, bei dem der α Winkel zwischen 105° und 135°, vorzugsweise zwischen 110° und 130° und beispielsweise zwischen 115° und 125° liegt.

3. Türflügel (1) nach einem der vorhergehenden Ansprüche, bei dem der β Winkel zwischen α-92° und α-88° liegt und beispielsweise α-90° beträgt.

4. Türöffner (1) nach einem der Ansprüche 1 bis 3, bei dem der α Winkel zwischen 115° und 125° liegt, wobei der β Winkel α-90° beträgt.

5. Türflügel (1) nach einem der vorhergehenden Ansprüche, bei dem das Dichtelement (14) aus einer Kunststofffolie hergestellt ist, die Polyethylen oder Polypropylen aufweist.

6. Türflügel (1) nach einem der vorhergehenden Ansprüche, bei dem die Innenauskleidung (10) und/oder die Außenhaut (12) aus einem metallischen Material, wie z.B. Stahl, hergestellt ist (sind).

7. Türflügel (1) nach einem der vorhergehenden Ansprüche, der eine Kraftfahrzeug-Seitentür bildet.

8. Kraftfahrzeug mit mindestens einem Türflügel (1) nach einem der vorhergehenden Ansprüche.

## Claims

1. Motor vehicle door (1) having an inner lining (10) secured to an outer skin (12), the inner lining (10) having at least one opening (100) enclosed by a removable sealing item (14), the sealing item (14) having:
- a base (140) disposed outside an inner space (18) formed between the outer skin (12) and the inner lining (10), the base (140) having a first sealing surface (146) bearing on a bearing surface (104) formed by a bearing portion (102) of the inner lining (10), the bearing portion (102) surrounding the opening (100) along the entire periphery thereof;
- a head (142) disposed within the internal space (18) and secured to the base (140) via a connecting part (144);
wherein the opening (100) of the inner lining (10) is defined by a flanged edge (106), comprising an end portion (108) secured to the bearing portion (102), and forming therewith a α angle of value lying in the range 100° to 150°, the tip (142) of the sealing item comprising a second sealing surface (148) which bears against the free end of the end portion (108) constituting the flanged edge (106), the sealing item (14) being configured such that the first sealing surface (146) and the second sealing surface (148) form an angle of value lying in the range α-95° and α-85°, the sealing item (14) being manufactured by thermoforming a sheet of a plastic material.

2. The door (1) according to claim 1, wherein the α angle is between 105° and 135°, and preferably between 110° and 130°, and for example between 115° and 125°.

3. The door (1) according to claim 1, wherein the β angle is between α-92° and α-88°, and for example equal to α-90°.

4. Door (1) according to Claims 1 to 3, in which the α angle is between 115° and 125°, the β angle being equal to α-90°.

5. An opening (1) according to any one of the previous claims, wherein the sealing item (14) is made from a plastic foil comprising polythene or polypropylene.

6. Door (1) according to one of the previous claims, in which the inner lining (10) and/or the outer skin (12) is (are) manufactured from a metallic material, such as steel.

7. Door (1) according to one of the previous claims, which forms a side door of a motor vehicle.

8. Motor vehicle comprising at least one door (1) according to one of the previous claims.
